# EUROPEAN PATENT APPLICATION

(11) **EP 4 734 575 A1**
(43) Date of publication of application: **29.04.2026**
(21) Application number: 24858316.3
(22) Date of filing: 14.08.2024
(51) Int. Cl.: H04W 12/041, H04L 9/40, H04L 9/32, H04L 9/14, H04L 9/06, H04W 12/06

(54) **SECURITY NEGOTIATION-BASED COMMUNICATION METHOD, AND APPARATUS**

(30) Priority: 28.08.2023 CN 202311096346
(71) Applicant: Huawei Technologies Co., Ltd., Shenzhen, Guangdong 518129 (CN)
(72) Inventor: DU, Zhibin, Shenzhen, Guangdong 518129 (CN); ZHU, Kun, Shenzhen, Guangdong 518129 (CN); GUO, Jianjun, Shenzhen, Guangdong 518129 (CN); YE, Chengliang, Shenzhen, Guangdong 518129 (CN); HE, Yulong, Shenzhen, Guangdong 518129 (CN); XIE, Fangkui, Shenzhen, Guangdong 518129 (CN); TANG, Jiansheng, Shenzhen, Guangdong 518129 (CN)
(74) Representative: Thun, Clemens
(86) International application number: PCT/CN2024/112110
(87) International publication number: WO 2025/044773

(57) **Abstract**

A security negotiation-based communication method and an apparatus are provided. The method includes: receiving proposal information from a first apparatus, where the proposal information indicates at least two algorithms of a first algorithm type supported by the first apparatus, and the at least two algorithms include M secure algorithms and N insecure algorithms; and sending first information to the first apparatus when a second apparatus supports a first secure algorithm in the M secure algorithms and a first insecure algorithm in the N insecure algorithms, where the first information indicates the first secure algorithm, and the first secure algorithm is used for communication with the first apparatus. According to the method, when the second apparatus supports the first secure algorithm in the M secure algorithms and the first insecure algorithm in the N insecure algorithms, an algorithm obtained through security negotiation is a secure algorithm rather than an insecure algorithm, thereby reducing impact on confidentiality and integrity of information transmitted between the first apparatus and the second apparatus, and enhancing security of communication between the first apparatus and the second apparatus.

## Description

### CROSS-REFERENCE TO RELATED APPLICATIONS

This application claims priority to Chinese Patent Application No. 202311096346.1, filed with the China National Intellectual Property Administration on August 28, 2023, and entitled "SECURITY NEGOTIATION-BASED COMMUNICATION METHOD AND APPARATUS", which is incorporated herein by reference in its entirety.

### TECHNICAL FIELD

This application relates to the field of communication technologies, and in particular, to a security negotiation-based communication method and an apparatus.

### BACKGROUND

In a communication system, a sending apparatus of two communication parties may encrypt to-be-transmitted information by using an encryption algorithm, and a receiving apparatus of the two communication parties may decrypt received information by using a decryption algorithm, thereby ensuring security of information transmitted between the sending apparatus and the receiving apparatus.

How to effectively determine a secure algorithm by two communication parties further needs to be studied.

### SUMMARY

This application provides a communication method and an apparatus, to enhance security of an algorithm determined during security negotiation.

**According to a first aspect,** an embodiment of this application provides a communication method. The method may be applied to a second apparatus. The second apparatus may be a communication device or a module (for example, a circuit, a chip, a chip system, or a processor) in the communication device, or may be a logical node, a logical module, or software that can implement all or a part of functions of the communication device, or may be a combination of a hardware circuit and a software module. This is not limited. The method may include: receiving proposal information from a first apparatus, where the proposal information may indicate at least two algorithms of a first algorithm type supported by the first apparatus, the at least two algorithms include M secure algorithms and N insecure algorithms, and M and N are positive integers; and sending first information to the first apparatus when the second apparatus supports a first secure algorithm in the M secure algorithms and a first insecure algorithm in the N insecure algorithms, where the first information indicates the first secure algorithm, and the first secure algorithm is used for communication with the first apparatus.

According to the method, when both the first apparatus and the second apparatus support the first secure algorithm and the first insecure algorithm, an algorithm obtained negotiation between the first apparatus and the second apparatus is a secure algorithm rather than an insecure algorithm, thereby reducing impact on confidentiality and integrity of information transmitted between the first apparatus and the second apparatus, and enhancing security of communication between the first apparatus and the second apparatus.

In a possible design, the method further includes: receiving second information. The second information may indicate at least one of the following: a first secure algorithm set or a first insecure algorithm set. The first secure algorithm set includes the first secure algorithm, and the first insecure algorithm set includes the first insecure algorithm. According to this design, the second apparatus may determine secure algorithms based on the second information. In this way, regardless of how indication information of the algorithms in the proposal information is sorted, the second apparatus may select a secure algorithm supported by both the first apparatus and the second apparatus, thereby enhancing security of communication between the first apparatus and the second apparatus.

In a possible design, the proposal information may include indication information of each of the at least two algorithms, and indication information of M1 secure algorithms in the M secure algorithms precedes indication information of N1 insecure algorithms in the N insecure algorithms. A secure algorithm in the M secure algorithms other than the M1 secure algorithms follows the M1 secure algorithms, and an insecure algorithm in the N insecure algorithms other than the N1 insecure algorithms follows the N1 insecure algorithms. M1 is a positive integer less than or equal to M, and N1 is a positive integer less than or equal to N.

Optionally, the first secure algorithm is a 1^{st} secure algorithm supported by the second apparatus in the at least two algorithms in a front-to-back sequence of the indication information of the algorithms in the proposal information.

In the proposal information, the indication information of the M1 secure algorithms in the M secure algorithms precedes the indication information of the N1 insecure algorithms in the N insecure algorithms. Therefore, the second apparatus may preferentially select, as the first secure algorithm, a secure algorithm supported by the second apparatus from the M1 secure algorithms, so that a secure algorithm supported by both the first apparatus and the second apparatus can be quickly obtained through negotiation, thereby enhancing security of communication between the first apparatus and the second apparatus.

In a possible design, the M secure algorithms may satisfy at least one of the following conditions.
1. In the M secure algorithms, a secure algorithm that is determined earlier as the secure algorithm is less prioritized in the M secure algorithms. In this way, the first apparatus and the second apparatus may preferentially obtain through negotiation a latest secure algorithm for communication.
2. In the M secure algorithms, a secure algorithm with a higher security coefficient is more prioritized in the M secure algorithms. In this way, the first apparatus and the second apparatus may preferentially obtain through negotiation a secure algorithm with a high security coefficient for communication, thereby further enhancing security of communication between the first apparatus and the second apparatus.

In a possible design, the first algorithm type includes one of the following: an encryption algorithm, an integrity algorithm, a key exchange algorithm, or a pseudo-random algorithm. This design is applicable to security negotiation of a plurality of algorithm types. In this way, the first apparatus and the second apparatus may obtain through negotiation secure algorithms of the plurality of algorithm types, thereby enhancing security of communication between the first apparatus and the second apparatus.

**According to a second aspect,** an embodiment of this application provides a communication method. The method may be applied to a first apparatus. The first apparatus may be a communication device or a module (for example, a circuit, a chip, a chip system, or a processor) in the communication device, or may be a logical node, a logical module, or software that can implement all or a part of functions of the communication device, or may be a combination of a hardware circuit and a software module. This is not limited. The method may include: sending proposal information to a second apparatus, where the proposal information may indicate at least two algorithms of a first algorithm type supported by the first apparatus, the at least two algorithms include M secure algorithms and N insecure algorithms, and M and N are positive integers; and receiving first information from the second apparatus, where the first information indicates a first secure algorithm, and the first secure algorithm is used for communication with the second apparatus.

In a possible design, the proposal information includes indication information of each of the at least two algorithms, and indication information of M1 secure algorithms in the M secure algorithms precedes indication information of N1 insecure algorithms in the N insecure algorithms. A secure algorithm in the M secure algorithms other than the M1 secure algorithms follows the M1 secure algorithms, and an insecure algorithm in the N insecure algorithms other than the N1 insecure algorithms follows the N1 insecure algorithms. M1 is a positive integer less than or equal to M, and N1 is a positive integer less than or equal to N.

In a possible design, the M secure algorithms satisfy at least one of the following conditions.
1. In the M secure algorithms, a secure algorithm that is determined earlier as the secure algorithm is less prioritized in the M secure algorithms.
2. In the M secure algorithms, a secure algorithm with a higher security coefficient is more prioritized in the M secure algorithms.

In a possible design, the method further includes: receiving third information. The third information indicates at least one of the following: a second secure algorithm set or a second insecure algorithm set, where the second secure algorithm set includes the M secure algorithms, and the second insecure algorithm set includes the N insecure algorithms.

In a possible design, the first algorithm type includes one of the following: an encryption algorithm, an integrity algorithm, a key exchange algorithm, or a pseudo-random algorithm.

**According to a third aspect,** an embodiment of this application provides a communication method. The method may be applied to a third apparatus. The third apparatus may be a server or a module (for example, a circuit, a chip, a chip system, or a processor) in the server, or may be a logical node, a logical module, or software that can implement all or a part of functions of the server, or may be a combination of a hardware circuit and a software module. This is not limited. The method may include: determining and outputting second information, where the second information indicates at least one of the following: a first secure algorithm set or a first insecure algorithm set.

According to the method, the third apparatus may output the second information indicating at least one of the first secure algorithm set or the first insecure algorithm set, so that an apparatus receiving the second information can determine secure algorithms and insecure algorithms in a timely manner. In this way, when both the first apparatus and the second apparatus support the first secure algorithm and the first insecure algorithm, an algorithm obtained negotiation between the first apparatus and the second apparatus is a secure algorithm rather than an insecure algorithm, thereby enhancing security of communication between the first apparatus and the second apparatus. In addition, in the method, the third apparatus outputs the second information instead of manually configuring at least one of the first secure algorithm set or the first insecure algorithm set, thereby reducing configuration operations of a management person and improving efficiency of configuring at least one of the first secure algorithm set or the first insecure algorithm set.

In a possible design, the method further includes outputting at least one of the following:
outputting a security coefficient of each secure algorithm in the first secure algorithm set, so that at least one of the first apparatus or the second apparatus may determine the security coefficient of each secure algorithm in the first secure algorithm set in a timely manner; or
outputting indication information of output time of the second information, so that at least one of the first apparatus or the second apparatus may determine the output time of the second information in a timely manner.

**According to a fourth aspect,** this application provides a communication apparatus. The communication apparatus may be a second apparatus. The communication apparatus has a function of implementing the first aspect. For example, the communication apparatus includes a corresponding module, unit, or means for performing the operations in the first aspect. The module, unit, or means may be implemented by software, may be implemented by hardware, or may be implemented by hardware executing corresponding software.

In a possible design, the communication apparatus includes a processing unit and an interface unit. The interface unit may be configured to send and receive signals, to implement communication between the communication apparatus and another apparatus. The processing unit may be configured to perform some internal operations of the communication apparatus. Functions performed by the processing unit and the interface unit may correspond to the operations in the first aspect.

In a possible design, the communication apparatus includes a processor, and the processor is configured to implement functions in the first aspect. In a possible implementation, the processor is coupled to a memory, and the memory may store a computer program or instructions for implementing the function in the first aspect. The processor may execute the computer program or the instructions stored in the memory. When the computer program or the instructions are executed, the communication apparatus is caused to implement the method in any possible design according to the first aspect.

Optionally, the communication apparatus further includes the memory.

In a possible design, the communication apparatus includes a processor and an interface circuit. The processor is configured to: communicate with another apparatus via the interface circuit, and perform the method in any possible design according to the first aspect.

**According to a fifth aspect,** this application provides a communication apparatus. The communication apparatus may be a first apparatus. The communication apparatus has a function of implementing the second aspect. For example, the communication apparatus includes a corresponding module, unit, or means for performing the operations in the second aspect. The module, unit, or means may be implemented by software, may be implemented by hardware, or may be implemented by hardware executing corresponding software.

In a possible design, the communication apparatus includes a processing unit and an interface unit. The interface unit may be configured to send and receive signals, to implement communication between the communication apparatus and another apparatus. The processing unit may be configured to perform some internal operations of the communication apparatus. Functions performed by the processing unit and the interface unit may correspond to the operations in the second aspect.

In a possible design, the communication apparatus includes a processor, and the processor is configured to implement functions in the second aspect. In a possible implementation, the processor is coupled to a memory. The memory may store a computer program or instructions for implementing the functions in the second aspect. The processor may execute the computer program or the instructions stored in the memory. When the computer program or the instructions are executed, the communication apparatus is caused to implement the method in any possible design according to the second aspect.

Optionally, the communication apparatus further includes the memory.

In a possible design, the communication apparatus includes a processor and an interface circuit. The processor is configured to: communicate with another apparatus via the interface circuit, and perform the method in any possible design according to the second aspect.

**According to a sixth aspect,** this application provides a communication apparatus. The communication apparatus may be a third apparatus. The communication apparatus has a function of implementing the third aspect. For example, the communication apparatus includes a corresponding module, unit, or means for performing the operations in the third aspect. The module, unit, or means may be implemented by software, may be implemented by hardware, or may be implemented by hardware executing corresponding software.

In a possible design, the communication apparatus includes a processing unit and an interface unit. The interface unit may be configured to send and receive signals, to implement communication between the communication apparatus and another apparatus. The processing unit may be configured to perform some internal operations of the communication apparatus. Functions performed by the processing unit and the interface unit may correspond to the operations in the third aspect.

In a possible design, the communication apparatus includes a processor, and the processor is configured to implement functions in the third aspect. In a possible implementation, the processor is coupled to a memory. The memory may store a computer program or instructions for implementing the functions in the third aspect. The processor may execute the computer program or the instructions stored in the memory. When the computer program or the instructions are executed, the communication apparatus is caused to implement the method in any possible design according to the third aspect.

Optionally, the communication apparatus further includes the memory.

In a possible design, the communication apparatus includes a processor and an interface circuit. The processor is configured to: communicate with another apparatus via the interface circuit, and perform the method in any possible design according to the third aspect.

**According to a seventh aspect,** this application provides a communication system. The communication system may include at least two of the communication apparatus in the fourth aspect, the communication apparatus in the fifth aspect, and the communication apparatus in the sixth aspect.

**According to an eighth aspect,** this application provides a computer-readable storage medium. The computer storage medium stores computer-readable instructions. When a computer reads and executes the computer-readable instructions, the computer is caused to perform the method in any possible design according to any one of the first aspect to the third aspect.

**According to a ninth aspect,** this application provides a computer program product. The computer program product includes computer program code, and when a computer reads and executes the computer program code, the computer is caused to perform the method in any possible design according to any one of the first aspect to the third aspect.

**According to a tenth aspect,** this application provides a chip. The chip is configured to read a computer program stored in a memory, to perform the method in any possible design according to any one of the first aspect to the third aspect.

### BRIEF DESCRIPTION OF DRAWINGS

FIG. 1 is a flowchart of a communication method according to an embodiment of this application;
FIG. 2 is a flowchart of another communication method according to an embodiment of this application;
FIG. 3 is a diagram of a structure of a communication apparatus according to an embodiment of this application; and
FIG. 4 is a diagram of a structure of another communication apparatus according to an embodiment of this application.

### DESCRIPTION OF EMBODIMENTS

This application provides a communication method and an apparatus. The method and the apparatus are based on a same technical concept. Therefore, mutual reference may be made to implementations of the method and the apparatus, and repeated parts are not described.

The following first describes some terms in this application for ease of understanding.

(1) A communication device is a device that has a communication function.

In some examples, the communication device may be a device in a mobile communication system, for example, a terminal, an access network (access network, AN) device, or a core network device. The mobile communication system is, for example, a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system (for example, a long term evolution (long term evolution, LTE) system), a 5th generation (5th generation, 5G) mobile communication system (for example, a new radio (new radio, NR) system), or a future evolved communication system (for example, a 6th generation (6th generation, 6G) mobile communication system). Alternatively, the mobile communication system may be a system that integrates at least two of the foregoing communication systems.

In some other examples, the communication device may alternatively be a device in another communication system. For example, the communication device may be a communication node in a network, for example, an optical transmission network, a cloud core network, a network address translation (network address translation, NAT) transit network, or a space transmission network.

In this application, the communication device that performs security negotiation may also be referred to as an internet key exchange (internet key exchange, IKE) device or an IKE peer (peer) device.

(2) An access network device is a device in a radio access network (radio access network, RAN), and is configured to assist a terminal in implementing radio access. The access network device may also be referred to as an access network node.

The RAN may be a cellular system related to the 3rd generation partnership project (3rd generation partnership project, 3GPP), for example, a 4G mobile communication system such as LTE, a 5G mobile communication system such as NR, or a future-oriented evolved system (for example, a 6G mobile communication system). The RAN may alternatively be an open radio access network (open RAN, O-RAN or ORAN), or a cloud radio access network (cloud radio access network, CRAN). The RAN may alternatively be a communication system that integrates the foregoing two or more systems.

In a possible scenario, the access network device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, or the like. The access network device may be a macro base station, a micro base station, an indoor base station, a relay node, a donor node, or a radio controller in a CRAN scenario. Optionally, the access network device may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or a part of functions of the access network device in this application may alternatively be implemented by using a software function running on hardware, or may be implemented by using a virtualization function instantiated on a platform (for example, a cloud platform). The access network device in this application may alternatively be a logical node, a logical module, or software that can implement all or a part of the functions of the access network device.

In another possible scenario, a plurality of access network devices cooperate to assist the terminal in implementing radio access, and different access network devices respectively implement a part of functions of a base station. For example, the access network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand their meanings. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

(3) A core network device is a network element in a core network. The core network device can connect a terminal to different data networks, and perform at least one of the following services: charging, mobility management, session management, user plane forwarding, and the like. In communication systems of different standards, names of core network devices with a same function may be different. However, a specific name of a core network device with each function is not limited in embodiments of this application.

For example, in a 4G mobile communication system, a network element responsible for functions such as access control, security control, and signaling coordination is a mobility management entity (mobility management entity, MME); a network element serving as a local mobility management anchor is a serving gateway (serving gateway, S-GW); a network element serving as a handover anchor for an external data network and responsible for internet protocol (internet protocol, IP) address allocation is a packet data network (packet data network, PDN) gateway (PDN gateway, P-GW); a network element storing user-related data and subscription data is a home subscriber server (home subscriber server, HSS); and a network element responsible for policy and charging functions is referred to as a policy and charging control rule function (policy and charging rule function, PCRF) network element.

For another example, in a 5G mobile communication system, based on specific logical function division, a core network may be divided into a control plane (control plane, CP) and a user plane (user plane, UP). In the core network, a network element responsible for a control plane function may be collectively referred to as a control plane network element, and a network element responsible for a user plane function may be collectively referred to as a user plane network element. Specifically, on the user plane, a network element used as an interface of a data network and responsible for functions such as user plane data forwarding is a user plane function (user plane function, UPF) network element. On the control plane, a network element responsible for access control and mobility management functions is referred to as an access and mobility management function (access and mobility management function, AMF) network element, a network element responsible for session management and control policy execution is referred to as a session management function (session management function, SMF) network element, a network element responsible for subscription data management and user access authorization functions is referred to as a unified data management (unified data management, UDM) network element, a network element responsible for charging and policy control functions is referred to as a policy control function (policy and charging function, PCF) network element, and a network element responsible for transmitting a requirement of an application side for a network side is an application function (application function, AF) network element.

(4) A terminal may also be referred to as a terminal device, user equipment (user equipment, UE), a mobile station, a mobile terminal, or the like. The terminal may be widely used in various scenarios, for example, device-to-device (device-to-device, D2D) communication, V2X communication, machine-type communication (machine-type communication, MTC), internet of things (internet of things, IoT), virtual reality, augmented reality, industrial control, self-driving, telemedicine, smart grid, smart furniture, smart office, smart wearable, smart transportation, and smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

### (5) Secure algorithm and insecure algorithm

Algorithms may be classified into secure algorithms and insecure algorithms based on algorithm security. Security of the secure algorithm is higher than security of the insecure algorithm. For example, when transmitted information is processed by using the secure algorithm, duration for a non-target receiving node to parse the information is greater than or equal to a duration threshold; or when transmitted information is processed by using the insecure algorithm, duration for a non-target receiving node to parse the information is less than the duration threshold. The duration threshold may be preconfigured, for example, specified in a protocol.

Whether a specific algorithm is a secure algorithm or an insecure algorithm may be preconfigured, for example, specified in a protocol, or may be notified/indicated by another device (for example, a server) to a communication device. This is not limited.

In the following descriptions of this application, "sending information to a specific device (for example, a terminal)" may be understood as that a destination end of the information is the device, and may include directly or indirectly sending the information to the device. "Receiving information from a specific device (for example, a terminal)" or "receiving information from a specific device (for example, a terminal)" may be understood as that a source end of the information is the device, and may include directly or indirectly receiving the information from the device. Information may undergo necessary processing, for example, a format change, between the source end and the destination end for information sending. However, the destination end may understand valid information from the source end. A similar expression in this application may be understood similarly, and details are not described herein.

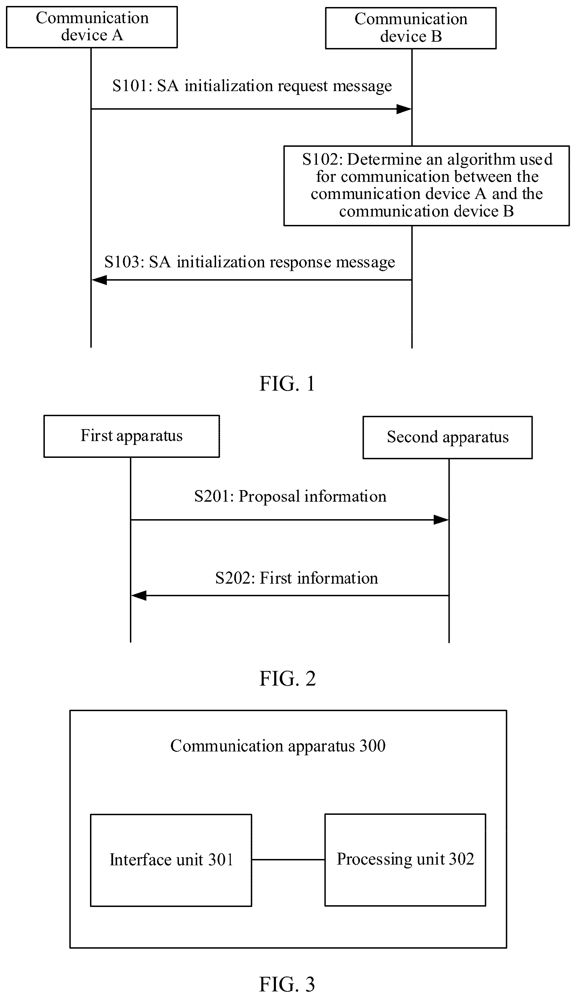

To enhance communication security, an algorithm used for communication between two communication parties may be determined through security negotiation. The following describes a security negotiation method by using an example in which two communication parties are a communication device A and a communication device B. As shown in FIG. 1, the security negotiation method may include the following steps.

S101: The communication device A sends a security association (security association, SA) initialization (SA Init) request message to the communication device B.

The SA Init request message includes a payload carrying proposal (proposal) information. The proposal information may indicate an algorithm supported by the communication device A. For example, the proposal information may include one or more pieces of transform (transform) information, and each piece of transform information may indicate an algorithm of an algorithm type supported by the communication device A. In each piece of transform information, algorithms are sorted by sizes of identifiers (identifier, ID) of the algorithms. A smaller ID of an algorithm indicates that the algorithm is more prioritized. Because an ID of an insecure algorithm is usually less than an ID of a secure algorithm, when an algorithm indicated by a piece of transform information includes a secure algorithm and an insecure algorithm, an ID of the insecure algorithm precedes an ID of the secure algorithm.

For example (referred to as Example 1 below), the proposal information includes three pieces of transform information: encryption algorithm transform information, integrity algorithm transform information, and key exchange algorithm (for example, a diffie-hellman (diffie-hellman, DH) algorithm) transform information. In other words, the proposal information indicates algorithms of three algorithm types supported by the communication device A, and the three algorithm types include an encryption algorithm, an integrity algorithm, and a DH algorithm.

### 1. Encryption algorithm transform information

Encryption algorithms supported by the communication device A include: triple data encryption standard (triple data encryption standard, 3DES), advanced encryption standard cipher block chaining mode (advanced encryption standard cipher block chaining mode, AESCBC) 128, and advanced encryption standard galois/counter mode (advanced encryption standard galois/counter mode, AESGCM) 128. 3DES is an insecure algorithm. AESCBC128 and AESGCM128 are secure algorithms. An ID of 3DES is smaller than IDs of AESCBC128 and AESGCM128. In the encryption algorithm transform information, the algorithms are sorted by the IDs as: 3DES, AESCBC128, and AESGCM128.

### 2. Integrity algorithm transform information

Integrity algorithms supported by the communication device A include: secure hash algorithm (secure hash algorithm, SHA) 1, SHA2-256, SHA2-512, and SHA3-256. SHA1 is an insecure algorithm. SHA2-256, SHA2-512, and SHA3-256 are secure algorithms. An ID of SHA1 is smaller than IDs of SHA2-256, SHA2-512, and SHA3-256. In the integrity algorithm transform information, the algorithms are sorted by the IDs as: SHA1, SHA2-256, SHA2-512, and SHA3-256.

### 3. DH algorithm transform information

DH algorithms supported by the communication device A include: DH1, DH5, DH14, DH19, and DH31. DH1, DH5, and DH14 are insecure algorithms. DH19 and DH31 are secure algorithms. IDs of DH1, DH5, and DH14 are smaller than IDs of DH19 and DH31. In the DH algorithm transform information, the algorithms are sorted by the IDs as: DH1, DH5, DH14, DH19, and DH31.

S102: The communication device B determines, based on the SA Init request message, an algorithm used for communication between the communication device A and the communication device B.

For each piece of transform information, the communication device B may select, in a front-to-back sequence of the IDs of the algorithms, an algorithm supported by the communication device B as the algorithm used for communication between the communication device A and the communication device B. Example 1 is still used as an example. If algorithms supported by the communication device B and the communication device A are completely the same, algorithms selected by the communication device B include: 3DES, SHA1, and DH1.

S103: The communication device B sends an SA initialization (Init) response message to the communication device A.

The SA Init response message may indicate the algorithm determined by the communication device B in S102. For example, if the algorithms selected by the communication device B include 3DES, SHA1, and DH1, the SA Init response message may include the ID of 3DES, the ID of SHA1, and the ID of DH1.

According to the method shown in FIG. 1, when the communication device A and the communication device B support both a secure algorithm and an insecure algorithm, an algorithm obtained through negotiation is usually an insecure algorithm. If the communication device A communicates with the communication device B by using an insecure algorithm, confidentiality and integrity of information transmitted between the communication device A and the communication device B are affected, and communication security is reduced.

In view of this, an embodiment of this application provides a communication method. FIG. 2 is a schematic flowchart corresponding to a communication method according to an embodiment of this application. FIG. 2 shows the method by using an example in which a first apparatus and a second apparatus are interaction execution entities. However, the interaction execution entities are not limited in this application. For example, the first apparatus and the second apparatus may be two communication devices interacting with each other, or may be modules used in the two communication devices interacting with each other, for example, circuits, chips, chip systems, or processors, or may be logical nodes, logical modules, or software that can implement all or a part of functions of the communication devices.

S201: The first apparatus sends proposal information to the second apparatus. Correspondingly, the second apparatus receives the proposal information from the first apparatus.

The proposal information may indicate at least two algorithms of a first algorithm type supported by the first apparatus. The at least two algorithms may include M secure algorithms and N insecure algorithms, and M and N are positive integers. The proposal information may directly indicate the at least two algorithms. For example, the proposal information includes indication information (for example, IDs) of the at least two algorithms. Alternatively, the proposal information may indirectly indicate the at least two algorithms. For example, the proposal information includes information corresponding to the at least two algorithms.

For example, the first algorithm type includes one of the following: an encryption algorithm, an integrity algorithm, a key exchange algorithm (for example, a DH algorithm or another key exchange algorithm, which is not limited), or a pseudo-random algorithm. The at least two algorithms of the first algorithm type may be encapsulated in transform information corresponding to the first algorithm type. For example, when the first algorithm type is the encryption algorithm, the at least two algorithms of the first algorithm type may be encapsulated in encryption algorithm transform information.

It should be understood that the proposal information may be carried in a conventional message (for example, an SA Init request message) or may be carried in a new message. This is not limited in this application.

In a possible implementation, the M secure algorithms indicated by the proposal information are all secure algorithms of the first algorithm type supported by the first apparatus. According to the method, a secure algorithm may be obtained through negotiation with the second apparatus as much as possible. In another possible implementation, the M secure algorithms indicated by the proposal information are a part of secure algorithms of the first algorithm type supported by the first apparatus. According to the method, signaling overheads can be reduced. Similarly, the N insecure algorithms indicated by the proposal information are all or a part of insecure algorithms of the first algorithm type supported by the first apparatus. This is not limited.

S202: The second apparatus sends first information to the first apparatus when the second apparatus supports a first secure algorithm in the M secure algorithms and a first insecure algorithm in the N insecure algorithms. Correspondingly, the first apparatus receives the first information from the second apparatus.

The first information may indicate the first secure algorithm. For example, the first information includes indication information (for example, an ID) of the first secure algorithm. The first secure algorithm may be used for communication between the first apparatus and the second apparatus.

The proposal information may indicate a plurality of types of secure algorithms supported by the first apparatus and a plurality of types of secure algorithms supported by the second apparatus, and the first information may indicate a plurality of types of first securities. This is not limited. Table 1 shows several possible examples. Alternatively, the proposal information may indicate a plurality of types of insecure algorithms supported by the first apparatus, and a plurality of types of insecure algorithms and first insecure algorithms supported by the second apparatus. This is not limited. Table 2 shows several possible examples. Any example in Table 1 may be combined with any example in Table 2.

**Table 1**

| | Secure algorithm, supported by the first apparatus and indicated by the proposal information | Secure algorithm supported by the second apparatus | First secure algorithm |
|---|---|---|---|
| Example a1 | M secure algorithms | Secure algorithm #1 in the M secure algorithms | Secure algorithm #1 |
| Example a2 | M secure algorithms | M2 secure algorithms in the M secure algorithms, where M2 is greater than or equal to 2 and less than or equal to M | One of the M2 secure algorithms |
| Example a3 | M secure algorithms | Secure algorithm #1 in the M secure algorithms, and A secure algorithms, where any one of the A secure algorithms does not belong to the M secure algorithms, and A is a positive integer | Secure algorithm #1 |
| Example a4 | M secure algorithms | M2 secure algorithms in the M secure algorithms and A secure algorithms | One of the M2 secure algorithms |

**Table 2**

| | Insecure algorithm, supported by the first apparatus and indicated by the proposal information | Insecure algorithm supported by the second apparatus | First insecure algorithm |
|---|---|---|---|
| Example b1 | N insecure algorithms | Insecure algorithm #1 in the N insecure algorithms | Insecure algorithm #1 |
| Example b2 | N insecure algorithms | N2 insecure algorithms in the N insecure algorithms, where N2 is greater than or equal to 2 and less than or equal to N | One of the N2 insecure algorithms |
| Example b3 | N insecure algorithms | Insecure algorithm #1 in the N insecure algorithms, and B insecure algorithms, where any one of the B insecure algorithms does not belong to the N insecure algorithms, and B is a positive integer | Insecure algorithm #1 |
| Example b4 | N insecure algorithms | N2 insecure algorithms in the N insecure algorithms, and B insecure algorithms | One of the N2 insecure algorithms |

The following describes the first secure algorithm indicated by the first information by using an example in which the first algorithm type is the encryption algorithm, the integrity algorithm, and the key exchange algorithm respectively.

For example, the first algorithm type is the encryption algorithm. The M secure algorithms in the encryption algorithm supported by the first apparatus include AESCBC128 and AESGCM128, and the N insecure algorithms in the encryption algorithm supported by the first apparatus include 3DES. If the second apparatus supports 3DES, AESCBC128, and AESGCM128, the first secure algorithm may be one of AESCBC128 and AESGCM128.

For another example, the first algorithm type is the integrity algorithm. The M secure algorithms in the integrity algorithms supported by the first apparatus include SHA2-256, SHA2-512, and SHA3-256, and the N insecure algorithms in the integrity algorithms supported by the first apparatus include SHA1. If the second apparatus supports SHA1, SHA2-256, SHA2-512, and SHA3-256, the first secure algorithm may be one of SHA2-256, SHA2-512, and SHA3-256.

For still another example, the first algorithm type is the key exchange algorithm. The M secure algorithms in the key exchange algorithm supported by the first apparatus include DH19 and DH31, and the N insecure algorithms in the DH algorithm supported by the first apparatus include DH1, DH5, and DH14. If the second apparatus supports DH1, DH5, DH14, DH19, and DH31, the first secure algorithm may be one of DH19 and DH31.

It should be understood that the first information may be carried in a conventional message (for example, an SA Init response message), or may be carried in a new message. This is not limited in this application.

According to the method shown in FIG. 2, when both the first apparatus and the second apparatus support the first secure algorithm and the first insecure algorithm, an algorithm obtained negotiation between the first apparatus and the second apparatus is a secure algorithm rather than an insecure algorithm, thereby reducing impact on confidentiality and integrity of information transmitted between the first apparatus and the second apparatus, and enhancing security of communication between the first apparatus and the second apparatus.

The method shown in FIG. 2 is described by using an example in which security negotiation is performed on an algorithm of the first algorithm type. It should be understood that the method shown in FIG. 2 is alternatively applicable to performing security negotiation on algorithms of a plurality of algorithm types, as described below.

In S201, the first apparatus may send proposal information to the second apparatus, where the proposal information may indicate at least two algorithms of each of P algorithm types supported by the first apparatus, and P is an integer greater than or equal to 2. Any algorithm for the P algorithm types may be the first algorithm type in S201. Optionally, the P algorithm types include at least two of the following: the encryption algorithm, the integrity algorithm, the key exchange algorithm, and the pseudo-random algorithm.

For an i^{th} algorithm type in the P algorithm types, i is an integer ranging from 1 to P, the at least two algorithms may include Mᵢ secure algorithms and Nᵢ insecure algorithms, and Mᵢ and Nᵢ are positive integers.

In S202, when the second apparatus supports an i^{th} secure algorithm in the Mᵢ secure algorithms and an i^{th} insecure algorithm in the Nᵢ insecure algorithms, the second apparatus may send, to the first apparatus, information indicating the i^{th} secure algorithm. The i^{th} secure algorithm may be used for communication with the first apparatus. For a relationship between the i^{th} secure algorithm and the Mᵢ secure algorithms, refer to Table 1, where the first secure algorithm is replaced with the i^{th} secure algorithm, and the Mᵢ secure algorithms are replaced with the M secure algorithms. For a relationship between the i^{th} insecure algorithm and the Nⁱ insecure algorithms, refer to Table 2, where the first insecure algorithm is replaced with the i^{th} insecure algorithm, and the Nᵢ insecure algorithms are replaced with the N insecure algorithms.

It should be understood that for the P algorithm types, the second apparatus may send P pieces of information to the first apparatus, including information indicating a 1^{st} secure algorithm to information indicating a P^{th} secure algorithm. The P pieces of information may be carried in a same message, or may be carried in different messages.

In some possible manners, the second apparatus may determine secure algorithms and insecure algorithms in Manner A1, Manner A2, or Manner A3. The secure algorithm supported by the second apparatus may be a full set or a subset of the secure algorithms, and the insecure algorithm supported by the second apparatus may be a full set or a subset of the insecure algorithms. This is not limited. For example, the secure algorithm supported by the second apparatus may be determined by the second apparatus based on configuration information of the second apparatus. For example, if the configuration information of the second apparatus indicates that the second apparatus supports a secure algorithm 1 to a secure algorithm 4, the second apparatus may determine the secure algorithm 1 to the secure algorithm 4 supported by the second apparatus. For another example, the secure algorithm supported by the second apparatus is the same as a secure algorithm determined based on second information. For another example, if the configuration information of the second apparatus indicates that the first apparatus supports an algorithm 1 to an algorithm 4, and the second apparatus determines, in the foregoing manner for determining the secure algorithms, that the algorithm 1 to the algorithm 4 are secure algorithms, the second apparatus may determine that the secure algorithms supported by the second apparatus are the algorithm 1 to the algorithm 4. The secure algorithm supported by the second apparatus is not limited in this application.

Manner A1: The second apparatus receives second information, where the second information may indicate at least one of the following: a first secure algorithm set or a first insecure algorithm set. The first secure algorithm set includes the first secure algorithm, and the first insecure algorithm set includes the first insecure algorithm. In this way, the second apparatus may determine at least one of the first secure algorithm set or the first insecure algorithm set based on the second information.

For example, the second information may include at least one of the following: indication information (for example, an ID) of each algorithm in the first secure algorithm set or indication information (for example, an ID) of each algorithm in the first insecure algorithm set. In a possible implementation, the second apparatus may receive one or more pieces of second information, and the second apparatus may update at least one of the first secure algorithm set or the first insecure algorithm set based on latest second information. The latest second information may indicate change information (as shown in Table 3 or another possible form) relative to a previous configuration, or may indicate a current latest configuration (as shown in Table 4 or another possible form). This is not limited.

In a possible example, the first secure algorithm set indicated by the second information includes the M secure algorithms, and the insecure algorithm set indicated by the first insecure algorithm set includes the N insecure algorithms.

**Table 3**

| Previous configuration | Indication of second information | Current configuration determined based on the second information (determined based on the previous configuration and the second information) |
|---|---|---|
| Secure algorithms are X1, X2, and X3, and insecure algorithms are Y1 and Y2 | X1 is changed to an insecure algorithm | Secure algorithms are X2 and X3, and insecure algorithms are X1, Y1, and Y2 |
| Secure algorithms are X1, X2, and X3, and insecure algorithms are Y1 and Y2 | Y1 is changed to a secure algorithm | Secure algorithms are X1, X2, X3, and Y1, and an insecure algorithm is Y2 |
| Secure algorithms are X1, X2, and X3, and insecure algorithms are Y1 and Y2 | X1 is changed to an insecure algorithm, and Y1 is changed to a secure algorithm | Secure algorithms are X2, X3, and Y1, and insecure algorithms are X1 and Y2 |

**Table 4**

| Previous configuration | Indication of second information | Current configuration determined based on the second information (same as the indication of the second information) |
|---|---|---|
| Secure algorithms are X1, X2, and X3, and insecure algorithms are Y1 and Y2 | Secure algorithms are X2 and X3, and insecure algorithms are X1, Y1, and Y2 | Secure algorithms are X2 and X3, and insecure algorithms are X1, Y1, and Y2 |

In some examples, the second information includes indication information of each algorithm in the first secure algorithm set. In this way, the second apparatus may determine the first secure algorithm set based on the second information. Optionally, the second apparatus may further determine an algorithm that does not belong to the first secure algorithm set as an insecure algorithm, to determine the first insecure algorithm set that includes the insecure algorithm. For example, the second information includes indication information of an algorithm 1 to indication information of an algorithm 4. The second apparatus may determine that the first secure algorithm set includes the algorithm 1 to the algorithm 4. Optionally, the second apparatus may further determine that algorithms (for example, an algorithm 5 and an algorithm 6) other than the algorithm 1 to the algorithm 4 are insecure algorithms, to determine that the first insecure algorithm set includes the algorithms (for example, the algorithm 5 and the algorithm 6) other than the algorithm 1 to the algorithm 4. For another example, second information 1 includes indication information of an algorithm 1 to indication information of an algorithm 3, and second information 2 includes indication information of an algorithm 4. The second apparatus may determine that the first secure algorithm set includes the algorithm 1 to the algorithm 4. Optionally, the second apparatus may further determine that algorithms (for example, an algorithm 5 and an algorithm 6) other than the algorithm 1 to the algorithm 4 are insecure algorithms, to determine that the first insecure algorithm set includes the algorithms (for example, the algorithm 5 and the algorithm 6) other than the algorithm 1 to the algorithm 4.

In some other examples, the second information includes indication information of each algorithm in the first secure algorithm set and indication information of each algorithm in the first insecure algorithm set. In this way, the second apparatus may determine the first secure algorithm set and the first insecure algorithm set based on the second information. For example, in the second information, indication information of algorithms in the first secure algorithm set includes indication information of an algorithm 1 to indication information of an algorithm 4, and indication information of algorithms in the first insecure algorithm set includes indication information of an algorithm 5 and indication information of an algorithm 6. The second apparatus may determine that the first secure algorithm set includes the algorithm 1 to the algorithm 4, and the first insecure algorithm set includes the algorithm 5 and the algorithm 6.

In some other examples, the second information includes indication information of each algorithm in the first insecure algorithm set. In this way, the second apparatus may determine the first insecure algorithm set based on the second information. Optionally, the second apparatus may further determine an algorithm that does not belong to the first insecure algorithm set as a secure algorithm, to determine the first secure algorithm set that includes the secure algorithm. For example, the second information includes indication information of an algorithm 5 and indication information of an algorithm 6. The second apparatus may determine that the first insecure algorithm set includes the algorithm 5 and the algorithm 6. Optionally, the second apparatus may further determine that algorithms (for example, an algorithm 1 to an algorithm 4) other than the algorithm 5 and the algorithm 6 are secure algorithms, to determine that the first secure algorithm set includes the algorithms (for example, the algorithm 1 to the algorithm 4) other than the algorithm 5 and the algorithm 6. For another example, second information 3 includes indication information of an algorithm 5, and second information 4 includes indication information of an algorithm 6. The second apparatus may determine that the first insecure algorithm set includes the algorithm 5 and the algorithm 6. Optionally, the second apparatus may further determine that algorithms (for example, an algorithm 1 to an algorithm 4) other than the algorithm 5 and the algorithm 6 are secure algorithms, to determine that the first secure algorithm set includes the algorithms (for example, the algorithm 1 to the algorithm 4) other than the algorithm 5 and the algorithm 6.

Optionally, after receiving the second information, the second apparatus may store at least one of the following: the first secure algorithm set or the first insecure algorithm set. For example, the second apparatus may store the first secure algorithm set in a local secure algorithm database. For another example, the second apparatus may store the first insecure algorithm set in a local insecure algorithm database.

It should be understood that a sequence of receiving the second information by the second apparatus and receiving the proposal information by the second apparatus (that is, S201) is not limited in this application.

In some possible manners, the second information may be output by a third apparatus. Correspondingly, the second apparatus receives the second information output by the third apparatus. The third apparatus may be a server, for example, a network management server or an IKE device manager, or may be a module used in the server, for example, a circuit, a chip, a chip system, or a processor, or may be a logical node, a logical module, or software that can implement all or a part of functions of the server. In some examples, the third apparatus may be a module inside the server, for example, a chip. The third apparatus may output the second information to another module in the server, for example, a radio frequency module or a communication module. Then, the another module in the server may send the second information to the second apparatus. In some other examples, the third apparatus may send the second information to the second apparatus. In this case, the third apparatus may be an apparatus including a radio frequency module or a communication module, for example, a server.

The third apparatus may output the second information after determining the second information. The second information may be broadcast information. For example, the third apparatus broadcasts the second information to one or more apparatuses including the second apparatus. Alternatively, the second information may be unicast information. For example, the third apparatus sends the second information to the second apparatus in a unicast manner. The second information may be periodically sent by the third apparatus, or may be sent when at least one of the first secure algorithm set or the first insecure algorithm set is updated.

Manner A2: A secure algorithm set (for example, the first secure algorithm set) or secure algorithms, and an insecure algorithm set (for example, the first insecure algorithm set) or insecure algorithms may be preconfigured, for example, specified in a protocol, included in a factory configuration of the second apparatus, or preconfigured in a subscriber identity module (subscriber identity module, SIM) of the second apparatus. This is not limited.

Manner A3: A secure algorithm set (for example, the first secure algorithm set) or secure algorithms are notified by using the second information described in Manner A1, and an insecure algorithm set (for example, the first insecure algorithm set) or insecure algorithms are preconfigured by using the method described in Manner A2.

In some possible manners, the method shown in FIG. 2 further includes: The first apparatus determines secure algorithms and insecure algorithms. A determining manner of the first apparatus is the same as the determining manner of the second apparatus. Specifically, the second apparatus may be replaced with the first apparatus, the second information may be replaced with third information, the first secure algorithm set may be replaced with a second secure algorithm set, and the first insecure algorithm set may be replaced with a second insecure algorithm set. For details, refer to the foregoing Manner A1 to Manner A3. The details are not described herein again. A method for indicating the first secure algorithm set and/or the first insecure algorithm set to the second apparatus by using the second information is the same as a method for indicating the second secure algorithm set and/or the second insecure algorithm set to the first apparatus by using the third information, but indication results may be the same or different. This is not limited. For example, the third apparatus sends the third information to the first apparatus, and the third apparatus sends the second information to the second apparatus. Content indicated by the second information is the same as or different from content indicated by the third information. For example, a secure algorithm set indicated by the second information includes the first secure algorithm, and an insecure algorithm set indicated by the second information includes the first insecure algorithm; and a secure algorithm set indicated by the third information includes the M secure algorithms, and an insecure algorithm set indicated by the third information includes the N insecure algorithms. After determining the secure algorithms and the insecure algorithms, the secure algorithm supported by the first apparatus may be a full set or a subset of the secure algorithms, and the insecure algorithm supported by the first apparatus may be a full set or a subset of the insecure algorithms. This is not limited. For example, the secure algorithm supported by the first apparatus may be determined by the first apparatus based on configuration information of the first apparatus. For example, if the configuration information of the first apparatus indicates that the first apparatus supports a secure algorithm 1 to a secure algorithm 4, the first apparatus may determine the secure algorithm 1 to the secure algorithm 4 supported by the first apparatus. For another example, the secure algorithm supported by the first apparatus is the same as a secure algorithm indicated by the third information. For another example, if the configuration information of the first apparatus indicates that the first apparatus supports an algorithm 1 to an algorithm 4, and the first apparatus determines, in the foregoing manner for determining the secure algorithms, that the algorithm 1 to the algorithm 4 are secure algorithms, the first apparatus may determine that the secure algorithms supported by the first apparatus are the algorithm 1 to the algorithm 4. The secure algorithm supported by the first apparatus is not limited in this application.

The first apparatus and the second apparatus may use a same manner or different manners for determining. This is not limited. For example, both the first apparatus and the second apparatus use Manner A1 for determining. For another example, the first apparatus uses Manner A1 for determining, and the second apparatus uses Manner A2 for determining. Examples are not described one by one.

Optionally, after determining at least one of the first secure algorithm set or the first insecure algorithm set, the second apparatus may determine secure algorithms and insecure algorithms. In this case, the second apparatus may determine, in the following Manner R1 or Manner R2, the first secure algorithm in the M secure algorithms indicated by the proposal information from the first apparatus.

Manner R1: includes step B1 and step B2.

B1: The second apparatus determines, based on at least one of the first secure algorithm set or the first insecure algorithm set, the M secure algorithms in the at least two algorithms indicated by the proposal information.

In some examples, if M algorithms in the at least two algorithms belong to the first secure algorithm set, the second apparatus may determine that the M algorithms are the M secure algorithms.

In some other examples, if M algorithms in the at least two algorithms do not belong to the first insecure algorithm set, the second apparatus may determine that the M algorithms are the M secure algorithms.

B2: The second apparatus determines the first secure algorithm from the M secure algorithms.

In some possible manners, the second apparatus supports one of the M secure algorithms, and the second apparatus may determine the first secure algorithm as the secure algorithm. For example, as shown in Example a1 or Example a3 in Table 1, the second apparatus supports the secure algorithm #1 in the M secure algorithms, and the second apparatus may determine that the first secure algorithm is the secure algorithm #1.

In some other possible manners, the second apparatus supports M2 secure algorithms in the M secure algorithms (for example, as shown in Example a2 or Example a4 in Table 1), and the second apparatus may select one algorithm from the M2 secure algorithms as the first secure algorithm. There are a plurality of manners in which the second apparatus selects one algorithm from the M2 secure algorithms as the first secure algorithm, for example, Manner 1, Manner 2, or Manner 3.

**Manner 1:** The second apparatus randomly selects one algorithm from the M2 secure algorithms as the first secure algorithm. In other words, the first secure algorithm is any one of the M2 secure algorithms. For example, the M2 algorithms include an algorithm a1 and an algorithm a2. The second apparatus may randomly select one algorithm from the algorithm a1 and the algorithm a2 as the first secure algorithm.

**Manner 2:** The second apparatus selects one algorithm from the M2 secure algorithms as the first secure algorithm based on security coefficients of the M2 secure algorithms. In other words, the first secure algorithm may be determined based on the security coefficients of the M2 secure algorithms. For example, the second apparatus may select one algorithm with a highest security coefficient from the M2 secure algorithms as the first secure algorithm. In other words, the first secure algorithm is the algorithm with the highest security coefficient in the M2 secure algorithms. For example, the M2 algorithms include an algorithm a1 and an algorithm a2. If a security coefficient of the algorithm a1 is higher than a security coefficient of the algorithm a2, the second apparatus may select the algorithm a1 as the first secure algorithm.

The security coefficients of the M2 secure algorithms may be preconfigured, for example, specified in a protocol, or may be obtained from another device. For example, the third apparatus may output a security coefficient of each secure algorithm in the first secure algorithm set. Correspondingly, the second apparatus may receive the security coefficient of each secure algorithm in the first secure algorithm set. The first secure algorithm set includes the M2 secure algorithms. For an output manner of the security coefficient of each secure algorithm in the first secure algorithm set, refer to the output manner of the second information. Details are not described herein again. The security coefficient of each secure algorithm in the first secure algorithm set and the second information may be carried in a same message, or may be carried in different messages. This is not limited in this application.

A higher security coefficient of a secure algorithm indicates higher security of the secure algorithm. Therefore, in Manner 2, security of communication between the first apparatus and the second apparatus may be further enhanced.

**Manner 3:** The second apparatus selects one algorithm from the M2 secure algorithms as the first secure algorithm based on time at which the M2 secure algorithms are determined as secure algorithms. In other words, the first secure algorithm is determined based on the time at which the M2 secure algorithms are determined as secure algorithms. For example, the second apparatus may select, from the M2 secure algorithms, an algorithm that is determined as a secure algorithm at latest time as the first secure algorithm. In other words, the first secure algorithm is an algorithm that is determined as a secure algorithm at the latest time in the M2 secure algorithms. For example, the M2 algorithms include an algorithm a1 and an algorithm a2. If time at which the algorithm a1 is determined as a secure algorithm is later than time at which the algorithm a2 is determined as a secure algorithm, the second apparatus may select the algorithm a1 as the first secure algorithm.

The time at which the M2 secure algorithms are determined as secure algorithms may be preconfigured, for example, specified in a protocol, or may be obtained from another device.

In some possible manners, the time at which the M2 secure algorithms are determined as secure algorithms may be output time of the second information, and the first secure algorithm set indicated by the second information includes the M2 secure algorithms. For example, the third apparatus may output indication information (referred to as indication information 1 below) of the output time of the second information. Correspondingly, the second apparatus receives the indication information 1. The indication information 1 may indicate output time of indication information of each algorithm in the first secure algorithm set. For example, the first secure algorithm set includes an algorithm a1 to an algorithm a4, and the M2 secure algorithms include the algorithm a1 and the algorithm a2. If indication information of the algorithm a1 is carried in second information 5, and indication information of the algorithm a2 to indication information of the algorithm a4 are carried in second information 6, the indication information 1 includes a timestamp 1 indicating output time 1 of the second information 5, and a timestamp 2 indicating output time 2 of the second information 6. After receiving the indication information 1, the second apparatus may determine that the time at which the algorithm a1 is determined as a secure algorithm is the output time 1, and the time at which the algorithm a2 is determined as a secure algorithm is the output time 2.

For an output manner of the indication information 1, refer to the output manner of the second information. Details are not described herein again. The indication information 1 and the second information may be carried in a same message, or may be carried in different messages. This is not limited in this application.

In some other possible manners, the time at which the M2 secure algorithms are determined as secure algorithms may be receiving time of the second information, and the first secure algorithm set indicated by the second information includes the M2 secure algorithms. For example, the first secure algorithm set includes an algorithm a1 to an algorithm a4, and the M2 secure algorithms include the algorithm a1 and the algorithm a2. If indication information of the algorithm a1 is carried in second information 5, and indication information of the algorithm a2 to indication information of the algorithm a4 are carried in second information 6, the time at which the algorithm a1 is determined as a secure algorithm is time at which the second apparatus receives the second information 5, and the time at which the algorithm a2 is determined as a secure algorithm is time at which the second apparatus receives the second information 6.

In Manner 3, a latest secure algorithm may be preferentially obtained for communication through negotiation.

By using step B1 and step B2, the second apparatus may determine secure algorithms based on at least one of the first secure algorithm set or the first insecure algorithm set. In this way, regardless of how indication information of the algorithms in the proposal information in S201 is sorted, the second apparatus may select a secure algorithm supported by both the first apparatus and the second apparatus, thereby enhancing security of communication between the first apparatus and the second apparatus.

In some possible examples, in step B1, the second apparatus may determine a part of algorithms in the M secure algorithms, for example, M3 secure algorithms, where M3 is a positive integer less than M. In this case, in step B2, the second apparatus determines the first secure algorithm from the M3 secure algorithms. A specific algorithm is similar to the foregoing descriptions of B1 and B2. In other words, the second apparatus does not need to determine a quantity of secure algorithms indicated by the proposal information. After identifying some secure algorithms indicated by the proposal information, the second apparatus may determine the first secure algorithm from the secure algorithms. According to the method, implementation complexity of the second apparatus can be reduced, and computing resources can be saved.

### Manner R2:

The second apparatus may select a 1^{st} secure algorithm supported by the second apparatus from the at least two algorithms in a front-to-back sequence of the indication information of the algorithms in the proposal information, where the selected secure algorithm is the first secure algorithm. In other words, the first secure algorithm is the 1^{st} secure algorithm supported by the second apparatus in the at least two algorithms in the front-to-back sequence of the indication information of the algorithms in the proposal information. For example, the M secure algorithms are an algorithm a1 to an algorithm a4, and the N insecure algorithms are an algorithm b1 to an algorithm b3. In the proposal information, the algorithms are sorted by indication information from front to back as: the algorithm a1, the algorithm a2, the algorithm a3, the algorithm a4, the algorithm b1, the algorithm b2, and the algorithm b3. For example, if the second apparatus supports the algorithm a1 to the algorithm a4 and the algorithm b1 to the algorithm b3, the second apparatus selects the algorithm a1 as the first secure algorithm in the front-to-back sequence of the indication information of the algorithms in the proposal information. For another example, if the second apparatus supports the algorithm a2 to the algorithm a4 and the algorithm b1 to the algorithm b3, the second apparatus selects the algorithm a2 as the first secure algorithm in the front-to-back sequence of the indication information of the algorithms in the proposal information.

In the method provided in this embodiment of this application, to reduce implementation complexity of determining the first secure algorithm by the second apparatus, the following possible designs C1 to C4 may be performed on the proposal information.

Design C1: The proposal information includes indication information of each of the at least two algorithms, and the at least two algorithms include the M secure algorithms and the N insecure algorithms. Indication information of M1 secure algorithms in the M secure algorithms precedes indication information of N1 insecure algorithms in the N insecure algorithms. M1 is a positive integer less than or equal to M, and N1 is a positive integer less than or equal to N. According to the method, when the first secure algorithm is determined in the foregoing Manner R1, Manner R2, or another possible manner, the second apparatus can quickly determine the secure algorithms.

The M1 secure algorithms may be a part or all of the M secure algorithms. When the M1 secure algorithms are a part of the M secure algorithms, a secure algorithm in the M secure algorithms other than the M1 secure algorithms follows the M1 secure algorithms. The N1 insecure algorithms may be a part or all of the N insecure algorithms. When the N1 insecure algorithms are a part of the N insecure algorithms, an insecure algorithm in the N insecure algorithms other than the N1 insecure algorithms follows the N1 insecure algorithms.

In some examples, in the proposal information, indication information of the M secure algorithms may all precede indication information of the N insecure algorithms. For example, the M secure algorithms are an algorithm a1 to an algorithm a4, the M1 secure algorithms are a part or all of the M secure algorithms, and the N insecure algorithms are an algorithm b1 to an algorithm b3. In the proposal information, the algorithms are sorted by indication information from front to back as: the algorithm a1, the algorithm a2, the algorithm a3, the algorithm a4, the algorithm b1, the algorithm b2, and the algorithm b3.

In some other examples, in the proposal information, a part or all of the M secure algorithms other than the M1 secure algorithms follow a part or all of the N1 insecure algorithms. For example, the M secure algorithms are an algorithm a1 to an algorithm a4, the M1 secure algorithms are an algorithm a1, the N insecure algorithms are an algorithm b1 to an algorithm b3, and the N1 insecure algorithms are an algorithm b1 and an algorithm b2. This is used below for description. For example, in the proposal information, the algorithms are sorted by indication information from front to back as: the algorithm a1, the algorithm a2, the algorithm b1, the algorithm a3, the algorithm a4, the algorithm b2, and the algorithm b3. For another example, in the proposal information, the algorithms are sorted by indication information from front to back as: the algorithm a1, the algorithm b1, the algorithm a2, the algorithm a3, the algorithm a4, the algorithm b2, and the algorithm b3. For still another example, in the proposal information, the algorithms are sorted by indication information from front to back as: the algorithm a1, the algorithm b1, the algorithm b2, the algorithm b3, the algorithm a2, the algorithm a3, and the algorithm a4.

Design C2: The proposal information includes indication information of each of the at least two algorithms, and the at least two algorithms include the M secure algorithms and the N insecure algorithms. In the M secure algorithms, a secure algorithm that is determined earlier as the secure algorithm is less prioritized in the M secure algorithms. In other words, in the proposal information, indication information of the secure algorithm that is determined earlier as the secure algorithm in the M secure algorithms is less prioritized. For specific content of time at which the M secure algorithms are determined as secure algorithms, refer to the descriptions of the time at which the M2 secure algorithms are determined as secure algorithms in the foregoing Manner 3. In this reference, the M2 secure algorithms are replaced with the M secure algorithms, and details are not described herein again. In other words, the time at which the algorithms are determined as secure algorithms may be determined through preconfiguration, or based on output time of the second information, or based on time at which the secure algorithm is received. For example, the M secure algorithms are an algorithm a1 to an algorithm a4. If the algorithms are sorted by the time at which the algorithms are determined as secure algorithms from earliest to latest as: the algorithm a4, the algorithm a3, the algorithm a2, and the algorithm a1, then in the proposal information, the algorithms are sorted by the indication information from front to back as: the algorithm a1, the algorithm a2, the algorithm a3, and the algorithm a4. In this way, if the second apparatus determines the first secure algorithm in Manner a1, and the second apparatus supports the algorithm a1 to the algorithm a4, the second apparatus may determine the algorithm a1 as the first secure algorithm. According to this design, a latest secure algorithm may be preferentially obtained for communication through negotiation.

Design C3: The proposal information includes indication information of each of the at least two algorithms, and the at least two algorithms include the M secure algorithms and the N insecure algorithms. In the M secure algorithms, a secure algorithm with a higher security coefficient is more prioritized in the M secure algorithms. In other words, in the proposal information, indication information of a secure algorithm with a higher security coefficient in the M secure algorithms is more prioritized. For specific content of security coefficients of the M secure algorithms, refer to the descriptions of the security coefficients of the M2 secure algorithms in the foregoing Manner 2. In this reference, the M2 secure algorithms are replaced with the M secure algorithms, and details are not described herein again. In other words, the security coefficients of the secure algorithms may be determined through preconfiguration, indication by another device (for example, the third apparatus), or the like. For example, the M secure algorithms are an algorithm a1 to an algorithm a4. If the algorithms are sorted by the security coefficients in ascending order as: the algorithm a4, the algorithm a3, the algorithm a2, and the algorithm a1, then in the proposal information, the algorithms are sorted by the indication information from front to back as: the algorithm a1, the algorithm a2, the algorithm a3, and the algorithm a4. In this way, if the second apparatus determines the first secure algorithm in Manner a1, and the second apparatus supports the algorithm a1 to the algorithm a4, the second apparatus may determine the algorithm a1 as the first secure algorithm. A higher security coefficient of a secure algorithm indicates higher security of the secure algorithm. Therefore, according to this design, security of communication between the first apparatus and the second apparatus may be further enhanced.

Design C4: a combination of at least two of design C1 to design C3, for example, C1+C2, C1+C3, C1+C3, or C1+C2+C3.

Based on a same technical concept as the foregoing method embodiments, an embodiment of this application provides a communication apparatus, and the communication apparatus may be configured to perform functions of related steps in the foregoing method embodiments. The functions may be implemented by hardware, may be implemented by software, or may be implemented by hardware executing corresponding software. The hardware or the software includes one or more modules corresponding to the foregoing functions. The communication apparatus may be a communication device or a module (for example, a circuit or a chip) in the communication device, or may be a logical node, a logical module, or software that can implement all or a part of functions of the communication device; or the communication apparatus may be a server or a module (for example, a circuit or a chip) in the server, or may be a logical node, a logical module, or software that can implement all or a part of functions of the server. A possible example of the server is a network management system.

In a possible implementation, a structure of a communication apparatus provided in this embodiment of this application is shown in FIG. 3, and the communication apparatus includes an interface unit 301 and a processing unit 302. Functions of the units in the communication apparatus 300 are described below.

The interface unit 301 is configured to input and/or output information. Input information may be replaced with received information, and output information may be replaced with sent information. When outputting the information, the interface unit 301 may output the information to an apparatus other than the communication apparatus 300, or may output the information to another unit in the communication apparatus 300. In some manners, the interface unit 301 may be implemented by using at least one of a physical interface, a communication module, a communication interface, or an input/output interface. In some other manners, the interface unit 301 may be implemented by using an interface circuit, for example, a mobile communication module. The mobile communication module may include one or more of at least one antenna, at least one filter, a switch, a power amplifier, a low noise amplifier (low noise amplifier, LNA), and the like.

The processing unit 302 may be configured to support the communication apparatus 300 in performing processing actions in the foregoing method embodiments. The processing unit 302 may be implemented by using one or more processors. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

In an implementation, the communication apparatus 300 is used in the second apparatus in the embodiment of this application shown in FIG. 2. The following describes specific functions of the processing unit 302 in the implementation.

The processing unit 302 is configured to: receive proposal information from a first apparatus via the interface unit 301, where the proposal information indicates at least two algorithms of a first algorithm type supported by the first apparatus, the at least two algorithms include M secure algorithms and N insecure algorithms, and M and N are positive integers; and send first information to the first apparatus via the interface unit 301 when the second apparatus supports a first secure algorithm in the M secure algorithms and a first insecure algorithm in the N insecure algorithms, where the first information indicates the first secure algorithm, and the first secure algorithm is used for communication with the first apparatus.

In some possible manners, the processing unit 302 is further configured to receive second information via the interface unit 301, where the second information indicates at least one of the following: a first secure algorithm set or a first insecure algorithm set, where the first secure algorithm set includes the first secure algorithm, and the first insecure algorithm set includes the first insecure algorithm.

In another implementation, the communication apparatus 300 is used in the first apparatus in the embodiment of this application shown in FIG. 2. The following describes specific functions of the processing unit 302 in the implementation.

The processing unit 302 is configured to: send proposal information to a second apparatus via the interface unit 301, where the proposal information indicates at least two algorithms of a first algorithm type supported by the first apparatus, the at least two algorithms include M secure algorithms and N insecure algorithms, and M and N are positive integers; and receive first information from the second apparatus via the interface unit 301, where the first information indicates a first secure algorithm, and the first secure algorithm is used for communication with the second apparatus.

In some possible manners, the processing unit 302 is further configured to receive third information via the interface unit 301, where the third information indicates at least one of the following: a second secure algorithm set or a second insecure algorithm set, where the second secure algorithm set includes the M secure algorithms, and the second insecure algorithm set includes the N insecure algorithms.

In still another implementation, the communication apparatus 300 is used in the third apparatus in the embodiment of this application shown in FIG. 2. The following describes specific functions of the processing unit 302 in the implementation.

The processing unit 302 is configured to: determine second information, where the second information indicates at least one of the following: a first secure algorithm set or a first insecure algorithm set; and output the second information via the interface unit 301.

In some possible manners, the processing unit 302 is further configured to output, via the interface unit 301, at least one of the following: a security coefficient of each secure algorithm in the first secure algorithm set; or indication information of output time of the second information.

For more detailed descriptions of the processing unit 302 and the interface unit 301, directly refer to related descriptions in the method embodiment shown in FIG. 2. Details are not described herein again.

It should be noted that, in the foregoing embodiment of this application, division into the modules is an example, is merely logical function division, and may be another division during actual implementation. In addition, functional units in embodiments of this application may be integrated into one processing unit, may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or a part of the technical solutions may be implemented in the form of a software product. A computer software product is stored in a storage medium and includes several instructions for instructing a computer device (which may be a personal computer, a server, or a network device) or a processor to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

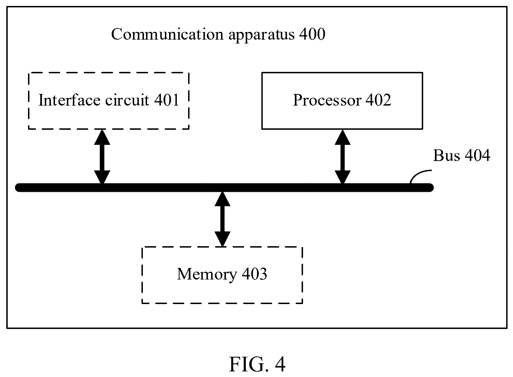

In a possible implementation, for a communication apparatus provided in this embodiment of this application, refer to FIG. 4. The communication apparatus 400 includes a processor 402. Optionally, the communication apparatus 400 further includes an interface circuit 401 and a memory 403. The interface circuit 401, the processor 402, and the memory 403 are coupled to each other.

Optionally, the interface circuit 401, the processor 402, and the memory 403 are coupled to each other via a bus 404. The bus 404 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representing the bus in FIG. 4, but this does not mean that there is only one bus or only one type of bus.

The interface circuit 401 is configured to input and/or output information. Input information may be replaced with received information, and output information may be replaced with sent information. When outputting the information, the interface circuit 401 may output the information to an apparatus other than the communication apparatus 400, or may output the information to another unit in the communication apparatus 400. For example, the interface circuit 401 may be implemented by using at least one of a physical interface, a communication module, a communication interface, an input/output interface, or a mobile communication module. The mobile communication module may include one or more of at least one antenna, at least one filter, a switch, a power amplifier, an LNA, and the like.

The processor 402 may be configured to support the communication apparatus 400 in performing processing actions in the foregoing method embodiments. When the communication apparatus 400 is configured to implement the foregoing method embodiments, the processor 402 may be further configured to implement functions of the foregoing processing unit 302. The processor 402 may be a CPU, or may be another general-purpose processor, a DSP, an ASIC, an FPGA or another programmable logic device, a transistor logic device, a hardware component, or any combination thereof. The general-purpose processor may be a microprocessor or any conventional processor.

In an implementation, the communication apparatus 400 is used in the second apparatus in the embodiment of this application shown in FIG. 2. The following describes specific functions of the processor 402 in the implementation.

The processor 402 is configured to: receive proposal information from a first apparatus via the interface circuit 401, where the proposal information indicates at least two algorithms of a first algorithm type supported by the first apparatus, the at least two algorithms include M secure algorithms and N insecure algorithms, and M and N are positive integers; and send first information to the first apparatus via the interface circuit 401 when the second apparatus supports a first secure algorithm in the M secure algorithms and a first insecure algorithm in the N insecure algorithms, where the first information indicates the first secure algorithm, and the first secure algorithm is used for communication with the first apparatus.

In another implementation, the communication apparatus 400 is used in the first apparatus in the embodiment of this application shown in FIG. 2. The following describes specific functions of the processor 402 in the implementation.

The processor 402 is configured to: send proposal information to a second apparatus via the interface circuit 401, where the proposal information indicates at least two algorithms of a first algorithm type supported by the first apparatus, the at least two algorithms include M secure algorithms and N insecure algorithms, and M and N are positive integers; and receive first information from the second apparatus via the interface circuit 401, where the first information indicates a first secure algorithm, and the first secure algorithm is used for communication with the second apparatus.

In still another implementation, the communication apparatus 400 is used in the third apparatus in the embodiment of this application shown in FIG. 2. The following describes specific functions of the processor 402 in the implementation.

The processor 402 is configured to: determine second information, where the second information indicates at least one of the following: a first secure algorithm set or a first insecure algorithm set; and output the second information via the interface circuit 401.

For a specific function of the processor 402, refer to the descriptions in the communication method provided in the foregoing embodiments and examples of this application, and the specific function descriptions of the communication apparatus 300 in the embodiment of this application shown in FIG. 3. Details are not described herein again.

The memory 403 is configured to store program instructions, data, and/or the like. Specifically, the program instructions may include program code, and the program code includes computer operation instructions. The memory 403 may include a RAM, and may further include a non-volatile memory (non-volatile memory), for example, at least one magnetic disk memory. The processor 402 executes the program instructions stored in the memory 403, and uses the data stored in the memory 403, to implement the foregoing functions, so as to implement the communication method provided in the foregoing embodiments of this application. The memory 403 may be integrated with the processor 402, or may be a memory outside the communication apparatus.

It may be understood that the memory 403 in FIG. 4 of this application may be a volatile memory or a non-volatile memory, or may include a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these memories and any memory of another proper type.

Based on the foregoing embodiments, an embodiment of this application further provides a computer program product including computer-executable instructions. When the computer program product is run, the methods provided in the foregoing embodiments are performed.

Based on the foregoing embodiments, an embodiment of this application further provides a computer-readable storage medium. The computer-readable storage medium stores a computer program. When the computer program is executed by a computer, the computer is caused to perform the methods provided in the foregoing embodiments.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer.

Based on the foregoing embodiments, an embodiment of this application further provides a chip. The chip is configured to read a computer program stored in a memory, to implement the methods provided in the foregoing embodiments.

Based on the foregoing embodiments, an embodiment of this application provides a chip system. The chip system includes a processor, configured to support a computer apparatus in implementing functions related to the devices in the foregoing embodiments. In a possible design, the chip system further includes a memory, and the memory is configured to store a program and data that are necessary for the computer apparatus. The chip system may include a chip, or may include a chip and another discrete component.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

This application is described with reference to the flowcharts and/or block diagrams of the methods, the devices (systems), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that an apparatus configured to implement a specific function in one or more procedures in the flowcharts and/or in one or more blocks in the block diagrams is generated by using instructions executed by a computer or the processor of any other programmable data processing device.

These computer program instructions may be stored in a computer-readable memory that can instruct a computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In text descriptions of this application, the character "/" usually indicates an "or" relationship between associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

It is clear that a person skilled in the art can make various modifications and variations to this application without departing from the scope of this application. This application is intended to cover these modifications and variations of this application provided that these modifications and variations fall within the scope of protection defined by the following claims in this application and equivalent technologies thereof.

## Claims

1. A communication method, comprising:
receiving proposal information from a first apparatus, wherein the proposal information indicates at least two algorithms of a first algorithm type supported by the first apparatus, the at least two algorithms comprise M secure algorithms and N insecure algorithms, and M and N are positive integers; and
outputting first information when a second apparatus supports a first secure algorithm in the M secure algorithms and a first insecure algorithm in the N insecure algorithms, wherein the first information indicates the first secure algorithm, and the first secure algorithm is used for communication with the first apparatus.

2. The method according to claim 1, further comprising:
receiving second information, wherein the second information indicates at least one of the following: a first secure algorithm set or a first insecure algorithm set, wherein the first secure algorithm set comprises the first secure algorithm, and the first insecure algorithm set comprises the first insecure algorithm.

3. The method according to claim 1 or 2, wherein the proposal information comprises indication information of each of the at least two algorithms, and indication information of M1 secure algorithms in the M secure algorithms precedes indication information of N1 insecure algorithms in the N insecure algorithms, wherein a secure algorithm in the M secure algorithms other than the M1 secure algorithms follows the M1 secure algorithms, an insecure algorithm in the N insecure algorithms other than the N1 insecure algorithms follows the N1 insecure algorithms, M1 is a positive integer less than or equal to M, and N1 is a positive integer less than or equal to N.

4. The method according to any one of claims 1 to 3, wherein the M secure algorithms satisfy at least one of the following conditions:
in the M secure algorithms, a secure algorithm that is determined earlier as the secure algorithm is less prioritized in the M secure algorithms; or
in the M secure algorithms, a secure algorithm with a higher security coefficient is more prioritized in the M secure algorithms.

5. The method according to any one of claims 1 to 4, wherein the first algorithm type comprises one of the following: an encryption algorithm, an integrity algorithm, a key exchange algorithm, or a pseudo-random algorithm.

6. A communication method, comprising:
sending proposal information to a second apparatus, wherein the proposal information indicates at least two algorithms of a first algorithm type supported by a first apparatus, the at least two algorithms comprise M secure algorithms and N insecure algorithms, and M and N are positive integers; and
receiving first information from the second apparatus, wherein the first information indicates a first secure algorithm, and the first secure algorithm is used for communication with the second apparatus.

7. The method according to claim 6, wherein the proposal information comprises indication information of each of the at least two algorithms, and indication information of M1 secure algorithms in the M secure algorithms precedes indication information of N1 insecure algorithms in the N insecure algorithms, wherein a secure algorithm in the M secure algorithms other than the M1 secure algorithms follows the M1 secure algorithms, an insecure algorithm in the N insecure algorithms other than the N1 insecure algorithms follows the N1 insecure algorithms, M1 is a positive integer less than or equal to M, and N1 is a positive integer less than or equal to N.

8. The method according to claim 6 or 7, wherein the M secure algorithms satisfy at least one of the following conditions:
in the M secure algorithms, a secure algorithm that is determined earlier as the secure algorithm is less prioritized in the M secure algorithms; or
in the M secure algorithms, a secure algorithm with a higher security coefficient is more prioritized in the M secure algorithms.

9. The method according to any one of claims 6 to 8, further comprising:
receiving third information, wherein the third information indicates at least one of the following: a second secure algorithm set or a second insecure algorithm set, wherein the second secure algorithm set comprises the M secure algorithms, and the second insecure algorithm set comprises the N insecure algorithms.

10. The method according to any one of claims 6 to 9, wherein the first algorithm type comprises one of the following: an encryption algorithm, an integrity algorithm, a key exchange algorithm, or a pseudo-random algorithm.

11. A communication method, comprising:
determining second information, wherein the second information indicates at least one of the following: a first secure algorithm set or a first insecure algorithm set; and
outputting the second information.

12. The method according to claim 11, further comprising:
outputting at least one of the following:
a security coefficient of each secure algorithm in the first secure algorithm set; or
indication information of output time of the second information.

13. A communication apparatus, configured to perform the method according to any one of claims 1 to 5.

14. A communication apparatus, comprising at least one processor, wherein the processor is configured to perform the method according to any one of claims 1 to 5.

15. A communication apparatus, configured to perform the method according to any one of claims 6 to 10.

16. A communication apparatus, comprising at least one processor, wherein the processor is configured to perform the method according to any one of claims 6 to 10.

17. A communication apparatus, configured to perform the method according to claim 11 or 12.

18. A communication apparatus, comprising at least one processor, wherein the processor is configured to perform the method according to claim 11 or 12.

19. A communication system, comprising:
the communication apparatus according to claim 13 or 14 and the communication apparatus according to claim 15 or 16; or
the communication apparatus according to claim 13 or 14, the communication apparatus according to claim 15 or 16, and the communication apparatus according to claim 17 or 18.

20. A computer-readable storage medium, wherein the computer-readable storage medium stores a computer program or instructions, and when the computer program or the instructions are executed by a communication apparatus, the method according to any one of claims 1 to 12 is implemented.

21. A computer program product, wherein the computer program product comprises computer program code or instructions, and when the computer program code or the instructions are run, the method according to any one of claims 1 to 12 is implemented.
